# EUROPEAN PATENT APPLICATION

(11) **EP 4 636 997 A1**
(43) Date of publication of application: **22.10.2025**
(21) Application number: 24781017.9
(22) Date of filing: 14.02.2024
(51) Int. Cl.: H02K 3/50, H02K 3/52, H02K 5/22, H02K 15/00, F04B 17/03, F04B 35/04, F25D 11/00

(54) **STATOR AND MOTOR COMPRISING SAME**

(30) Priority: 31.03.2023 KR 20230042996
(71) Applicant: Samsung Electronics Co., Ltd., Suwon-si, Gyeonggi-do 16677 (KR)
(72) Inventor: KIM, Jonggun, Suwon-si, Gyeonggi-do 16677 (KR); HWANG, Incheol, Suwon-si, Gyeonggi-do 16677 (KR); PARK, Jungwoo, Suwon-si, Gyeonggi-do 16677 (KR)
(74) Representative: Walaski, Jan Filip
(86) International application number: PCT/KR2024/002093
(87) International publication number: WO 2024/205023

(57) **Abstract**

A motor according to an embodiment of the present disclosure may comprise a rotor. The motor may comprise an insulator and a stator comprising multiple coils wound around the insulator. The motor may comprise a stator cover coupled to the stator. The insulator may comprise a first terminal groove for containing one end of each of the multiple coils and a second terminal groove for containing the other end of each of the multiple coils. The stator cover may comprise a first terminal containing portion inserted into/coupled to the first terminal groove such that a first wire connecting terminal is disposed therein. The stator cover may comprise a second terminal containing portion inserted into/coupled to the second terminal groove such that a second wire connecting terminal is disposed therein. The stator cover may comprise a power connector having one end connected to the second wire connecting terminal of the second terminal containing portion, the other end of the power connector being connected to an external power supply so as to apply power to the multiple coils.

## Description

### [Technical Field]

Embodiments of the disclosure relate to a stator including a stator cover in which a plurality of wire connection terminals and a power connector are integrated, and a motor including the same.

### [Background Art]

In general, a compressor is one of the components of a refrigeration cycle device and is a device that compresses a refrigerant at high temperature and high pressure and delivers it to the condenser. For example, the compressor may be provided in a home appliance such as a home refrigerator.

The compressor may be classified into various types depending on the compression method and sealing structure. For example, closed compressors may be divided into reciprocating compressors, scroll compressors, and rotary compressors. A closed compressor may include a compression mechanism unit for compressing the refrigerant and an electric mechanism unit (e.g., a motor) for driving the compression mechanism unit.

Motors are classified into several types depending on the driving method. Generally, capability-variable compressors mainly used among the compressors adopt a brushless motor and include an inverter controlled by a controller. The capability-variable compressors commonly adopt a method for driving the motor by applying the voltage generated by the switching operation of a switching element provided in the inverter to the motor windings (e.g., coils).

A motor may include a stator and a rotor. The rotor may include a rotor core and a magnet, and may be configured to interact electromagnetically with the stator having a coil. The rotor may be rotated by the force acting between the magnetic field by the rotor's magnet and the current flowing through the coil of the stator.

### [Detailed Description of the Invention]

### [Solution to Problems]

To apply current to the stator, an electrical connection is required between an external power source and the coils wound around the stator. To apply current to the coil, the motor may include a power connector that is connected to an external power source and is electrically connected to the coil through a wire connection terminal. When the power connector is integrated into the stator, interference may occur between the power connector and other components during the motor manufacturing process.

Various embodiments of the disclosure may provide a stator having a structure capable of temporarily fixing a power connector during a manufacturing process of a motor and a motor including the same.

Various embodiments of the disclosure may provide a stator including a stator cover in which a plurality of wire connection terminals and a power connector are integrated, and a motor including the same.

A motor according to an embodiment of the disclosure may comprise a rotor. The motor may comprise a stator including an insulator and a plurality of coils wound around the insulator. The motor may comprise a stator cover coupled to the stator. The insulator may include a first terminal recess receiving one end portion of each of the plurality of coils, and a second terminal recess receiving another end portion of each of the plurality of coils. The stator cover may include a first terminal receiving portion in which a first wire connection terminal is disposed and which is inserted into the first terminal recess. The stator cover may include a second terminal receiving portion in which a second wire connection terminal is disposed and which is inserted into the second terminal recess. The stator cover may include a power connector including end connected to the second wire connection terminal of the second terminal receiving portion and another end connected to an external power source to apply power to the plurality of coils.

According to an embodiment, the power connector may include a lead wire including one end connected to the second wire connection terminal. According to an embodiment, the power connector may include a terminal block connected to another end of the lead wire and configured to be electrically connected to the external power source.

According to an embodiment, the state cover may include a first cover body including the first terminal receiving portion and the second terminal receiving portion. The state cover may include a second cover body coupled to the first cover body and including a connector fixing portion configured to receive the terminal block.

According to an embodiment, the connector fixing portion may include a pair of fixing ribs spaced apart from each other and configured to surround at least a portion of each of two opposite side portions of the terminal block in a state where the terminal block is received by the connector fixing portion.

According to an embodiment, each of the pair of fixing ribs may have a chamfered outer end.

According to an embodiment, the connector fixing portion may include a stopper protruding from an upper surface of the connector fixing portion.

According to an embodiment, the second cover body of the stator cover may have an arc shape to cover an upper side of the first terminal receiving portion and the second terminal receiving portion provided in the first cover body.

According to an embodiment, each of the first terminal receiving portion and the second terminal receiving portion may be formed to protrude from a bottom surface of the second cover body facing the insulator, and may include a plurality of slits cut to be interposed by an end portion of each of the plurality of coils.

In an embodiment, the stator cover may be composed of an insulating material.

According to an embodiment, the stator cover may have a ring shape.

According to an embodiment, the first wire connection terminal may be configured to electrically connect the one end portion of each of the plurality of coils at a single point in a state where the stator is coupled to the stator cover. The second wire connection terminal may be configured to electrically connect the other end portion of each of the plurality of coils to the power connector so that power may be applied from the external power source to the plurality of coils in the state where the stator is coupled to the stator cover.

A motor according to an embodiment of the disclosure may comprise a rotor. The motor may comprise a stator including an insulator and a plurality of coils wound around the insulator. The motor may comprise a stator cover coupled to the stator. The stator cover may include a lead wire electrically connected to the plurality of coils. The stator cover may include a terminal block coupled to an end portion of the lead wire and configured to be connected to an external power source to receive power. The stator cover may include a connector fixing portion configured to receive the terminal block therein and provided to surround at least a portion of the terminal block in a state where the terminal block is received by the connector fixing portion.

According to an embodiment, the terminal block may include a block housing and a pair of fixing protrusions formed to protrude from two opposite side portions, respectively, of the block housing. The connector fixing portion may include a pair of fixing ribs spaced apart from each other and configured to surround the pair of fixing protrusions in a state where the terminal block is received by the connector fixing portion.

According to an embodiment, each of the pair of fixing ribs may have a chamfered outer end.

According to an embodiment, the connector fixing portion may include a stopper protruding from an upper surface of the connector fixing portion.

According to an embodiment, in the motor, at least a portion of an upper surface of the power connector may be externally exposed in the state where the terminal block is received by the connector fixing portion.

A refrigerator according to an embodiment of the disclosure may comprise a main body including a storage compartment therein. The refrigerator may comprise a door rotatably connected to the main body to open and close the storage compartment. The refrigerator may comprise a cold air supply device including a compressor including a motor, and configured to supply cold air into the storage compartment. The motor of the compressor may include a rotor, a stator including an insulator and a plurality of coils wound around the insulator, and a stator cover coupled to the stator 100. The insulator of the stator may include a first terminal recess receiving one end portion of each of the plurality of coils, and a second terminal recess receiving another end portion of each of the plurality of coils. The stator cover may include a first terminal receiving portion in which a first wire connection terminal is disposed and which is inserted into the first terminal recess, a second terminal receiving portion in which a second wire connection terminal is disposed and which is inserted into the second terminal recess, a power connector including one end portion connected to the second wire connection terminal of the second terminal receiving portion and the other end portion connected to an external power source to apply power to the plurality of coils, and a connector fixing portion receives the other end portion of the power connector therein and surrounds at least a portion of the other end portion in the state where the terminal block is received by the connector fixing portion.

Various embodiments of the disclosure may prevent interference between the power connector and other components during the manufacturing process by inserting and fixing the terminal block of the power connector into the connector fixing portion during the manufacturing process of the motor.

Various embodiments of the disclosure may simplify the manufacturing process since the coil may be electrically connected by a single compressing process of the stator and the stator cover, as the first wire connection terminal for connecting the coil to the neutral point and the second wire connection terminal for connecting the coil to the driving point are integrally provided on the stator cover.

Effects of the present disclosure are not limited to the foregoing, and other unmentioned effects would be apparent to one of ordinary skill in the art from the following description. In other words, unintended effects in practicing embodiments of the disclosure may also be derived by one of ordinary skill in the art from example embodiments of the disclosure.

### [Brief Description of the Drawings]

In connection with the description of the drawings, the same or similar reference numerals may be used to denote the same or similar elements.
FIG. 1A is a perspective view illustrating a stator assembly provided in a motor according to an embodiment of the disclosure.
FIG. 1B is an exploded perspective view illustrating some components of the stator assembly illustrated in FIG. 1A according to an embodiment of the disclosure.
FIG. 2 is a top perspective view illustrating a stator cover according to an embodiment of the disclosure.
FIG. 3 is an exploded perspective view illustrating a stator cover according to an embodiment of the disclosure.
FIG. 4 is a bottom perspective view illustrating a stator cover according to an embodiment of the disclosure.
FIG. 5 is a view illustrating a process in which a stator cover and a stator are coupled according to an embodiment of the disclosure.
FIG. 6A is an enlarged view illustrating a connection state of a coil in portion A of FIG. 4 according to an embodiment of the disclosure.
FIG. 6B is an enlarged view illustrating a connection state of a coil in portion B of FIG. 4 according to an embodiment of the disclosure.
FIG. 7 is a view illustrating an exemplary shape of a connector fixing portion included in portion C illustrated in FIG. 2 and a configuration of a terminal block of a power connector before being inserted into the connector fixing portion according to an embodiment of the disclosure.
FIG. 8A is a view illustrating an operation in which a terminal block of a power connector is inserted into a connector fixing portion of a stator cover according to an embodiment of the disclosure.
FIG. 8B is a view illustrating an operation in which a terminal block of a power connector is extracted from a connector fixing portion of a stator cover according to an embodiment of the disclosure.
FIG. 9 is a flowchart schematically illustrating an assembly process of a motor according to an embodiment of the disclosure.
FIG. 10 is a schematic illustration showing an assembly process of a motor according to an embodiment of the disclosure.
FIG. 11 is a front perspective view illustrating a refrigerator according to an embodiment of the disclosure.
FIG. 12 is a rear perspective view illustrating a refrigerator according to an embodiment of the disclosure.

### [Mode for Carrying out the Invention]

It should be appreciated that various embodiments of the present disclosure and the terms used therein are not intended to limit the technological features set forth herein to particular embodiments and include various changes, equivalents, or replacements for a corresponding embodiment.

With regard to the description of the drawings, similar reference numerals may be used to refer to similar or related elements.

It is to be understood that a singular form of a noun corresponding to an item may include one or more of the things, unless the relevant context clearly indicates otherwise.

As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases.

As used herein, such terms as "1st" and "2nd," or "first" and "second" may be used to simply distinguish a corresponding component from another, and does not limit the components in other aspect (e.g., importance or order).

It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

It will be further understood that the terms "comprise" and/or "have," as used herein, specify the presence of stated features, integers, steps, operations, elements, and/or components, but do not preclude the presence or addition of one or more other features, integers, steps, operations, elements, components, and/or groups thereof.

It will be understood that when a component is referred to as "connected to," "coupled to", "supported on," or "contacting" another component, the components may be connected to, coupled to, supported on, or contact each other directly or via a third component.

Throughout the specification, when one component is positioned "on" another component, the first component may be positioned directly on the second component, or other component(s) may be positioned between the first and second component.

The term "and/or" may denote a combination(s) of a plurality of related components as listed or any of the components.

Hereinafter, the working principle and embodiments of the present disclosure are described with reference to the accompanying drawings.

The motor according to an embodiment of the disclosure may be applied to various devices such as a refrigerator requiring a refrigeration cycle. However, the disclosure is not limited thereto, and the motor may be applied to various home appliances such as air conditioners.

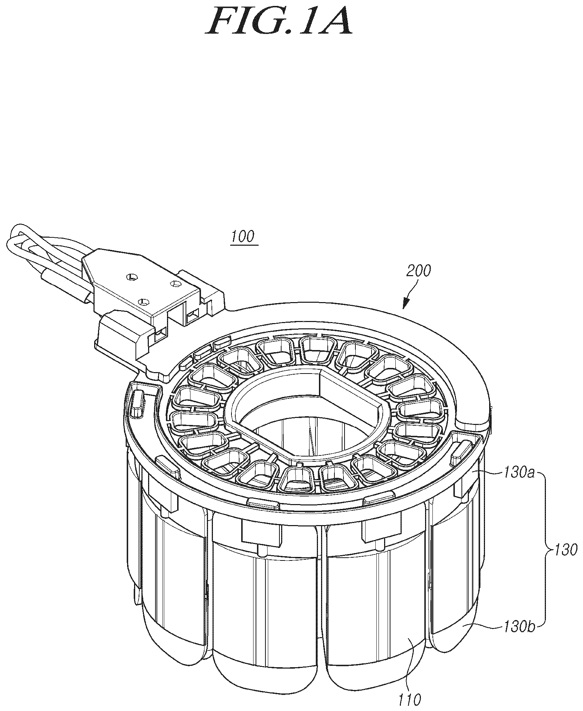

FIG. 1A is a perspective view illustrating a stator assembly provided in a motor according to an embodiment of the disclosure.

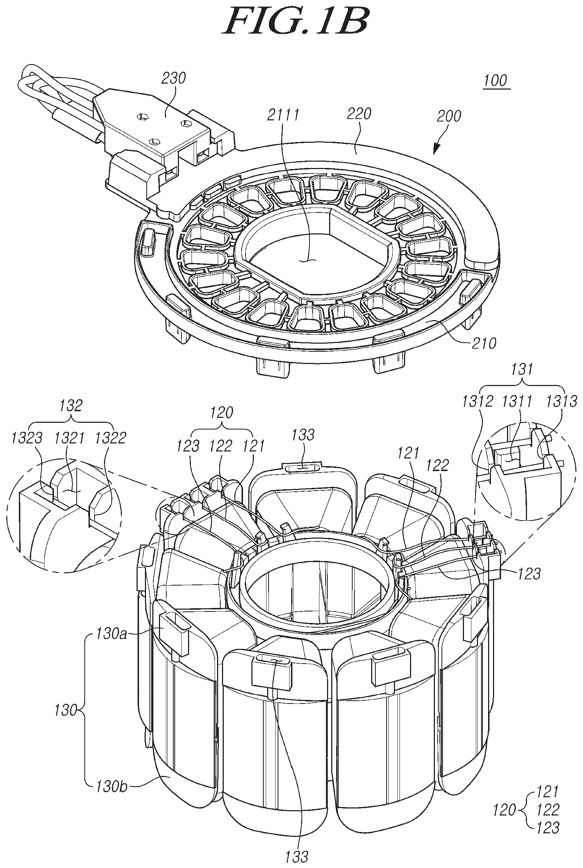

FIG. 1B is an exploded perspective view illustrating some components of the stator assembly illustrated in FIG. 1A according to an embodiment of the disclosure.

The motor according to an embodiment may include a stator 100 and a rotor (not illustrated) provided to interact with the stator 100 to rotate and a stator cover 200 provided to cover the upper side of the stator 100.

Referring to FIGS. 1A and 1B, an exemplary stator assembly including a stator 100 and a stator cover 200 is illustrated.

In an embodiment, the motor may be an outer rotor-type motor in which a rotor (not illustrated) is disposed outside the stator 100. The outer rotor-type motor may offer the advantage of greater output relative to its size when compared to the inner rotor-type motor, in which the rotor is positioned inside the stator. Therefore, the outer rotor-type motor is relatively small and may produce a high output, which is advantageous for downsizing.

In an embodiment, the rotor (not illustrated) may be disposed outside the stator 100. The rotor may interact with the stator 100 to rotate when current is applied to the plurality of coils 120 provided in the stator 100 to be described below. In an embodiment, the rotor may rotate around the rotational axis. Although not illustrated in detail in the drawings, the motor may include the rotary shaft (not illustrated) mounted on the rotor and rotating together with the rotor. In this case, the motor may transfer power to a compression unit (not illustrated) of the compressor (not illustrated) through the rotary shaft.

In an embodiment, the stator 100 may include a stator core 110, the plurality of coils 120, and an insulator 130 for insulating between the stator core 110 and the plurality of coils 120.

In an embodiment, the stator core 110 may include an annular core and the plurality of teeth (not illustrated) radially extending from the core.

In an embodiment, the plurality of coils 120 may be wound around the stator core 110 and/or the insulator 130. In an embodiment, the plurality of coils 120 may be formed of a plurality of lines (or wires). In an embodiment, the coil 120 may be configured to receive AC power in a three-phase form. For example, the plurality of coils 120 may include a U-phase coil 121, a V-phase coil 122, and a W-phase coil 123 wound around each of the plurality of teeth.

In an embodiment, the insulator 130 may be formed of an insulating material. For example, the insulator 130 may be formed of an insulating material such as resin.

According to an embodiment, the insulator 130 may be coupled to each of upper and lower portions of the stator core 110. In an embodiment, the insulator 130 may include a first insulator 130a forming an upper exterior of the insulator 130 and a second insulator 130b forming a lower exterior of the insulator 130. For example, the first insulator 130a may be press-fitted from an upper portion of the stator core 110. For example, the second insulator 130b may be press-fitted from a lower portion of the stator core 110. In this case, the insulator 130 may cover the plurality of teeth of the stator core 110 to prevent the coil 120 from being in direct contact with the stator core 110.

In an embodiment, a first terminal recess 131 supporting one end of each wire extracted from each of the plurality of coils 120 wound around the stator core 110 and/or the insulator 130 may be formed at one position of the upper portion of the first insulator 130a. In an embodiment, a second terminal recess 132 supporting the other end of each wire extracted from the plurality of coils 120 may be formed at another position of the upper portion of the first insulator 130a.

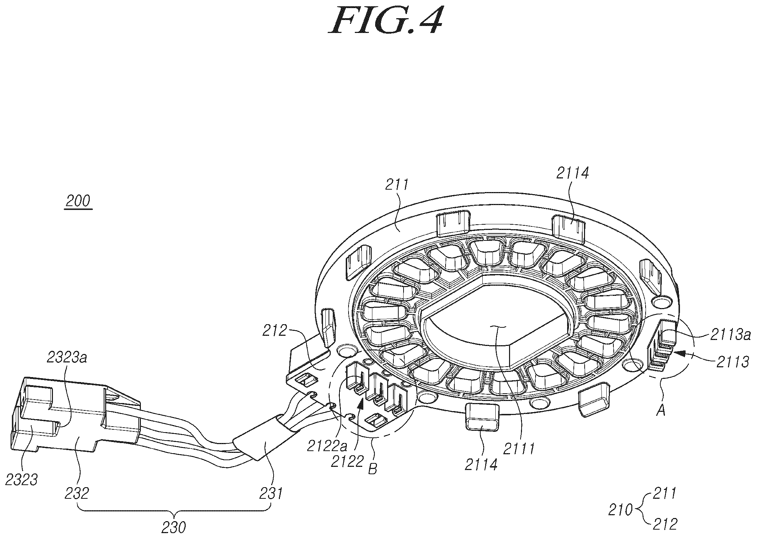

In an embodiment, a space 1311 into which a first terminal receiving portion 2113 of FIG. 4 of the stator cover 200 to be described below is inserted may be provided inside the first terminal recess 131.

In an embodiment, the first terminal recess 131 may include an inner surface adjacent to the coil 120 wound around the stator core 110 and/or the first insulator 130a and an outer surface facing the inner surface. In an embodiment, a plurality of slits 1312 and 1313 formed to be cut so that each wire extracted from each of the plurality of coils 120 is interposed may be provided in each of the inner and outer surfaces of the first terminal recess 131. For example, three slits 1312 for the three wires, respectively, may be formed in the inner surface of the first terminal recess 131. For example, three slits 1313 for the three wires, respectively, may be formed in the outer surface of the first terminal recess 131. The plurality of slits 1312 and 1313 formed in the inner and outer surfaces of the first terminal recess 131 may be formed to correspond to each other. For example, the plurality of slits 1312 formed in the inner surface of the first terminal recess 131 and the plurality of slits 1313 formed in the outer surface of the first terminal recess 131 may be provided at positions facing each other. The wire extracted from the coil 120 corresponding to one phase may be interposed in one of the plurality of slits 1312 and the slit 1313 corresponding thereto. In this case, one end of each wire extracted from each of the plurality of coils 120, e.g., the U-phase coil 121, the V-phase coil 122, and the W-phase coil 123, may be inserted into the slits 1312 and 1313, and thus be fixed in the first terminal recess 131.

In an embodiment, a space 1321 into which the second terminal receiving portion (2122 of FIG. 4) of the stator cover 200, which is described below, is inserted may be provided inside the second terminal recess 132.

In an embodiment, the second terminal recess 132 may include an inner surface adjacent to the coil 120 wound around the stator core 110 and/or the first insulator 130a and an outer surface facing the inner surface. In an embodiment, slits 1322 and 1323 formed to be cut so that each wire extracted from each of the plurality of coils 120 is interposed may be provided in each of the inner and outer surfaces of the second terminal recess 132. For example, three slits 1322 for the three wires, respectively, may be formed in the inner surface of the second terminal recess 132. For example, three slits 1323 for the three wires, respectively, may be formed in the outer surface of the second terminal recess 132. The plurality of slits 1322 and 1323 formed in the inner and outer surfaces of the second terminal recess 132 may be formed to correspond to each other. For example, the plurality of slits 1322 formed in the inner surface of the second terminal recess 132 and the plurality of slits 1323 formed in the outer surface of the second terminal recess 132 may be provided at positions facing each other. The wire extracted from the coil 120 corresponding to one phase may be interposed in one of the plurality of slits 1322 and the slit 1323 corresponding thereto. **In** this case, the other end of each wire extracted from each of the plurality of coils 120, e.g., the U-phase coil 121, the V-phase coil 122, and the W-phase coil 123, may be inserted into the slits 1322 and 1323, and thus be fixed in the second terminal recess 132.

**In** an embodiment, a plurality of coupling recesses 133 for coupling with the stator cover 200 may be provided in an upper portion of the first insulator 130a. **In an** embodiment, the plurality of coupling recesses 133 may be spaced apart from each other at predetermined intervals along the circumference of the first insulator 130a. **In** an embodiment, a space into which the coupling protrusion (2114 of FIG. 4) of the stator cover 200 corresponding to each coupling recess 133 to be described below is inserted may be provided inside each of the plurality of coupling recesses 133.

In an embodiment, the stator cover 200 may be coupled from an upper side of the stator 100. In this case, the stator cover 200 blocks the coil 120 of the stator 100 from the outside, thereby preventing foreign objects from entering the coil 120. Further, when coupled with the stator 100, the stator cover 200 may connect all of the neutral points and the driving points of the plurality of coils 120 in a single compressing operation. Hereinafter, a coil connection structure in the stator 100 and the stator cover 200 is described below.

In an embodiment, the stator cover 200 may be formed of an insulating material. For example, the stator cover 200 may be formed of an insulating material such as resin.

In an embodiment, the stator cover 200 may include a first cover body 210 and a second cover body 220. In an embodiment, the stator cover 200 may further include a power connector 230.

In an embodiment, the first cover body 210 may form an overall external appearance of the stator cover 200. In an embodiment, the first cover body 210 may be provided to have a substantially annular (ring) shape. In an embodiment, the first cover body 210 may be provided with a shaft hole 2111 through which the rotary shaft of the motor passes in a central portion thereof.

In an embodiment, the second cover body 220 may form at least a portion of the upper exterior of the stator cover 200. In an embodiment, the second cover body 220 may be provided to have a substantially arc shape. In an embodiment, the second cover body 220 may be coupled from an upper side of the first cover body 210. In an embodiment, the second cover body 220 may have a structure in which the power connector 230 is temporarily fixed to the stator 100 to prevent interference between the power connector 230 and other components during the motor assembly process. Hereinafter, a fixing structure of the power connector 230 is described below.

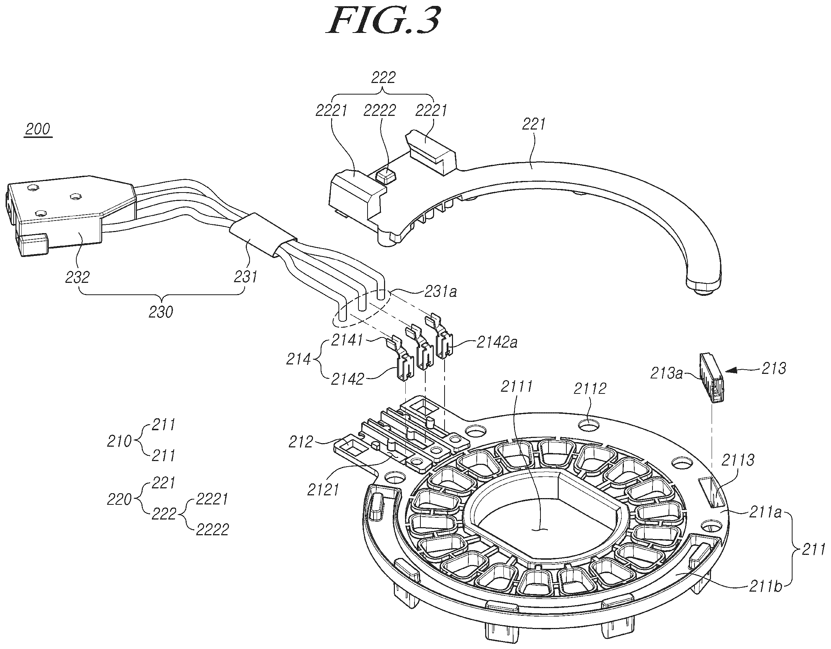

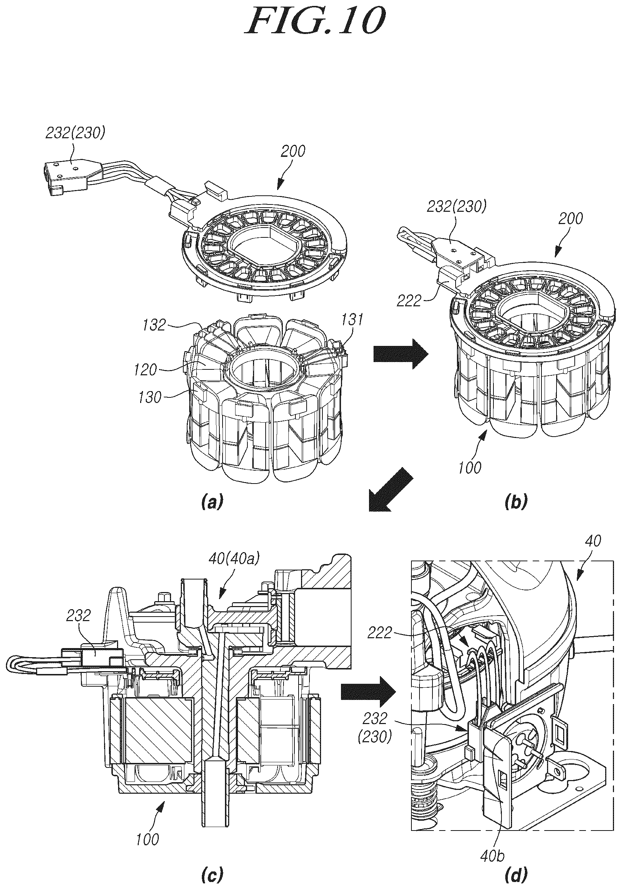

In an embodiment, one end portion of the power connector 230 is connected to a wire connection terminal (e.g., the second wire connection terminal 214 of FIG. 3) provided in the first body 210 to be described below, and the other end portion may be connected to an external power source (e.g., the power terminal 40b of the compressor 40 of FIG. 10). In this case, the external power may be applied to the coil 120 of the stator 100 through the power connector 230. Here, the wire connection terminal may be referred to as a mag-mate terminal.

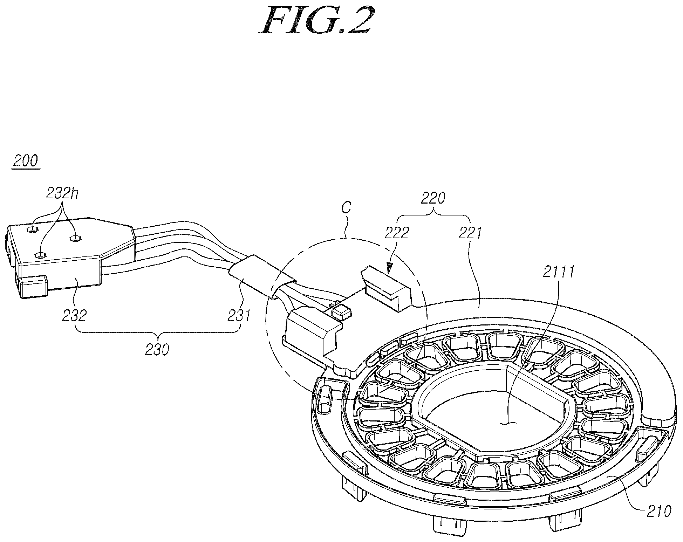

FIG. 2 is a top perspective view illustrating a stator cover according to an embodiment of the disclosure. FIG. 3 is an exploded perspective view illustrating a stator cover according to an embodiment of the disclosure. FIG. 4 is a bottom perspective view illustrating a stator cover according to an embodiment of the disclosure.

Referring to FIGS. 2 to 4, the stator cover 200 according to an embodiment may further include a first cover body 210, a second cover body 220, and a power connector 230.

In an embodiment, the first cover body 210 of the stator cover 200 may include a first body portion 211 and a connector connection portion 212.

In an embodiment, the first body portion 211 may form an overall external appearance of the first cover body 210. In an embodiment, the first cover body 210 may be provided with a shaft hole 2111 through which the rotary shaft of the motor passes in a central portion thereof.

In an embodiment, the first body portion 211 may include a flat portion 211a and a concave portion 211b recessed to have a step with the flat portion 211a.

In an embodiment, a plurality of fitting holes 2112 may be provided in an upper surface of the flat portion 211a. In an embodiment, the plurality of fitting holes 2112 may be disposed to be spaced apart from each other at predetermined intervals along the circumference of the flat portion 211a. In this case, as a plurality of fitting protrusions (not illustrated) of the second body portion 221 of the second cover body 220, which is described below, are inserted into the corresponding plurality of fitting holes 2112, respectively, the first cover body 210 and the second cover body 220 may be coupled. Further, when the first cover body 210 and the second cover body 220 are coupled, the second cover body 220 may be seated on the flat portion 211a of the first cover body 210.

In an embodiment, the first body portion 211 may be provided with the plurality of coupling protrusions 2114 for coupling the stator cover 200 with an insulator (e.g., the insulator 130 of FIG. 1B) of the stator (e.g., the stator 100 of FIG. 1B). In an embodiment, the plurality of coupling protrusions 2114 may be formed to protrude from the bottom surface (e.g., the surface facing the insulator 130) of the first body portion 211. In an embodiment, the plurality of coupling protrusions 2114 may be disposed at predetermined intervals along the circumference on the bottom surface of the first body portion 211.

In an embodiment, the first body portion 211 may include a first terminal receiving portion 2113 where the first wire connection terminal 213 electrically connected to each phase coil (e.g., the coils 121, 122, and 123 of FIG. 1B) is received when the insulator 130 of the stator 100 and the stator cover 200 are coupled.

**In** an embodiment, the first terminal receiving portion 2113 may be disposed on the bottom surface of the first body portion 211. **In** an embodiment, the first terminal receiving portion 2113 may extend in the lower direction from the bottom surface of the first body portion 211. **In** an embodiment, an upper side of the first terminal receiving portion 2113 is open, and the first wire connection terminal 213 may be received in the first terminal receiving portion 2113 through the open upper side. **In** an embodiment, the first terminal receiving portion 2113 may have an inner portion facing radially inward and an outer portion facing radially outward. **In** an embodiment, a plurality of slits 2113a formed by cutting may be provided in each of the inner and outer portions. In an embodiment, when the stator cover 200 and the insulator 130 of the stator 100 are coupled, one end of the wire extracted from each phase coil 121, 122, and 123 may be interposed in each of the plurality of slits 2113a.

In an embodiment, the first wire connection terminal 213 may be formed of a conductive material (e.g., metal).

In an embodiment, the plurality of slits 213a formed by cutting may be provided in two opposite side portions of the first wire connection terminal 213. In an embodiment, when the stator cover 200 and the insulator 130 are coupled, one end of the wire extracted from each phase coil 121, 122, and 123 may be interposed in each of the plurality of slits 213a. In this case, an insulation film at one end of the wire extracted from each phase coil 121, 122, and 123 may be removed through the plurality of slits 213a.

In an embodiment, the connector connection portion 212 may be provided on one side of the stator cover 200. In an embodiment, the connector connection portion 212 may extend from the first body portion 211 in a radial direction.

In an embodiment, the connector connection portion 212 may include a lead wire receiving portion 2121 recessed from the upper surface of the connector connection portion 212. In an embodiment, one end portion 231a of each of the lead wires 231 of the power connector 230 to be described below may be received in the lead wire receiving portion 2121. In an embodiment, the lead wire receiving portion 2121 may be divided into spaces respectively corresponding to the lead wires so as to receive the respective lead wires constituting the lead wire 231.

In an embodiment, a plurality of second wire connection terminals 214 for fixing one end portion 231a of each lead wire 231 of the power connector 230 may be disposed on the connector connection portion 212. In an embodiment, the plurality of second wire connection terminals 214 may fix one end portion 231a of each lead wire received in the lead wire receiving portion 2121 on one side of the lead wire receiving portion 2121.

In an embodiment, the second terminal receiving portion 2122 may be disposed on the bottom surface of the first body portion 211. In an embodiment, the second terminal receiving portion 2122 may extend in the lower direction from the bottom surface of the first body portion 211. In an embodiment, an upper side of the second terminal receiving portion 2122 is open, and the second terminal receiving portion 2122 may communicate with the lead wire receiving portion 2121 of the connector connection portion 212 through the open upper side. Further, the second wire connection terminal 214 may be received inside the second terminal receiving portion 2122 through the open upper side of the second terminal receiving portion 2122. In an embodiment, the second terminal receiving portion 2122 may have an inner portion facing radially inward and an outer portion facing radially outward. In an embodiment, a plurality of slits 2122a formed by cutting may be provided in each of the inner and outer portions. In an embodiment, when the stator cover 200 and the insulator 130 of the stator 100 are coupled, one end of the wire extracted from each phase coil 121, 122, and 123 may be interposed in each of the plurality of slits 2122a. In this case, each lead wire 231 of the power connector 230 may be electrically connected to each coil 120 of the stator 100.

In an embodiment, each of the plurality of second wire connection terminals 214 may include a first part 2141 to which one end portion 231a of each lead wire 231 of the lead wire receiving portion 2121 is coupled, and a second part 2142 bent in a vertical direction from the first part 2141 and then extending in the lower direction. In an embodiment, the second part 2142 of the second wire connection terminal 214 may be received in the second terminal receiving portion 2122.

In an embodiment, the second wire connection terminal 214 may be formed of a conductive material (e.g., metal).

In an embodiment, a plurality of slits 2142a formed by cutting may be provided in two opposite side portions of the second part 2142 of the second wire connection terminal 214. In an embodiment, when the stator cover 200 and the insulator 130 are coupled, one end of the wire extracted from each phase coil 121, 122, and 123 may be interposed in each of the plurality of slits 2142a. In this case, an insulation film at one end of the wire extracted from each phase coil 121, 122, and 123 may be removed through the plurality of slits 2142a.

In an embodiment, through the second wire connection terminal 214, each wire extending from the coil 120 fixed by the second part 2142 of the second wire connection terminal 214 may be connected to each lead wire 231 of the power connector 230 fixed by the first part 2141 of the second wire connection terminal 214.

In an embodiment, the second cover body 220 of the stator cover 200 may include a second body portion 221 and a connector fixing portion 222.

In an embodiment, the second body portion 221 may have a substantially arc shape.

In an embodiment, the second body portion 221 may be provided with a plurality of fitting protrusions (not illustrated) protruding from the bottom surface of the second body portion 221 at points respectively corresponding to the plurality of fitting holes 2112 formed in the upper surface of the flat portion 211a of the first body portion 211 described above although not specifically illustrated.

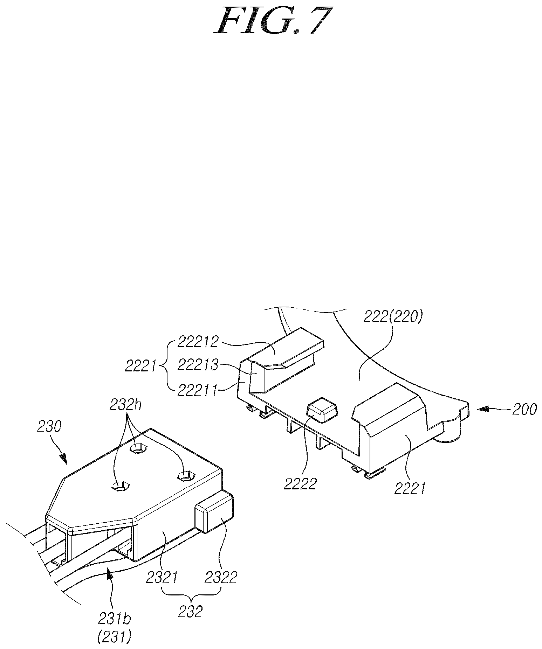

In an embodiment, the connector fixing portion 222 may be provided at one end of the second body portion 221. In an embodiment, the connector fixing portion 222 may extend from one end of the second body portion 221 in a radial direction. The detailed structure and function of the connector fixing portion 222 are described below in greater detail with reference to FIG. 7.

In an embodiment, the power connector 230 of the stator cover 200 may include a lead wire 231 and a terminal block 232.

In an embodiment, the lead wire 231 may have one end portion 231a connected to the connector connection portion 212 of the first cover body 210, and the other end connected to the terminal block 232.

In an embodiment, the lead wire 231 may be formed of a plurality of wires. For example, the lead wire 231 may be composed of three wires to receive three-phase AC power. In this case, one end portion of each wire of the lead wire 231 may be coupled and fixed to each of the plurality of second wire connection terminals 214.

In an embodiment, the terminal block 232 may be configured to be connected to an external power source. Although not specifically illustrated, for example, the other end portion (231b of FIG. 7) of each lead wire 231 may be fixedly disposed inside the terminal block 232.

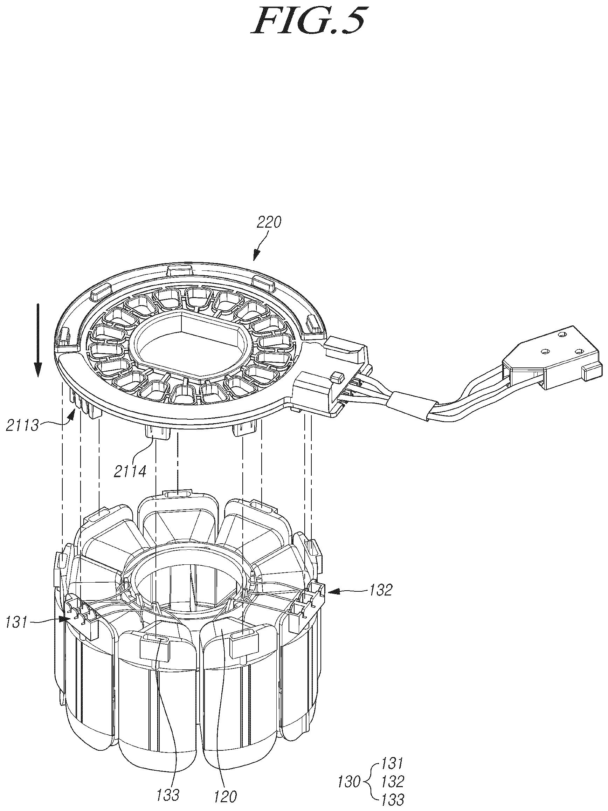

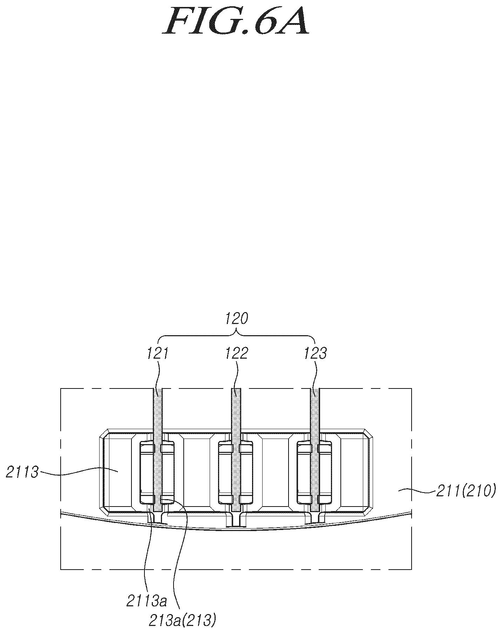

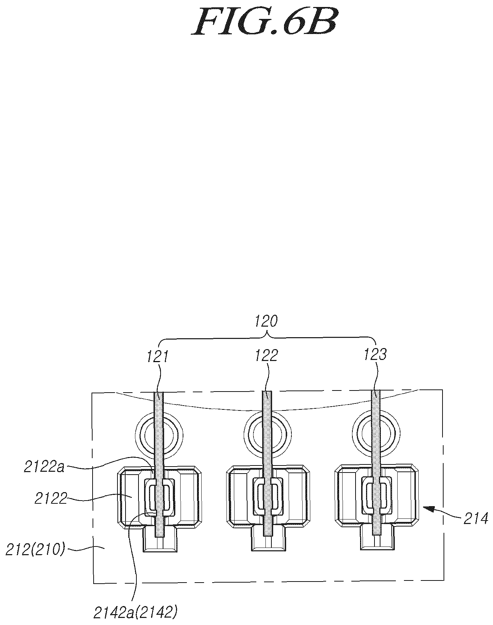

FIG. 5 is a view illustrating a process in which a stator cover and a stator are coupled according to an embodiment of the disclosure. FIG. 6A is an enlarged view illustrating a connection state of a coil in portion A of FIG. 4 according to an embodiment of the disclosure. FIG. 6B is an enlarged view illustrating a connection state of a coil in portion B of FIG. 4 according to an embodiment of the disclosure.

Specifically, FIG. 6A is a view illustrating that one end portion of each phase coil 121, 122, and 123 is interposed in the first wire connection terminal 213 received in the first terminal receiving portion 2113 of the stator cover 200, and FIG. 6B is a view illustrating that the other end portion of each phase coil 121, 122, and 123 is interposed in the second wire connection terminal 214 received in the second terminal receiving portion 2122 of the stator cover 200.

Referring to FIG. 5, the stator 100 and the stator cover 200 may be coupled as the stator cover 200 is compressed from the upper side to the lower side of the stator 100. Specifically, the stator 100 and the stator cover 200 may be integrally coupled as the first terminal receiving portion 2113, the second terminal receiving portion 2122 and the plurality of coupling protrusions 2114 provided on the bottom surface of the stator cover 200 are inserted into the first terminal recess 131, the second terminal recess 132 and the plurality of coupling recesses 133 provided in the upper portion (e.g., the first insulator 130a of FIG. 1B) of the insulator 130 of the stator 100.

When the stator 100 and the stator cover 200 are coupled, each phase coil 121, 122, and 123 fixed to the first terminal recess 131 of the insulator 130 may be interposed in the respective corresponding slot 213a of the first wire connection terminal 213 received inside the first terminal receiving portion 2113 corresponding to each phase coil, as illustrated in FIG. 6A. In this case, the respective end portions of the phase coils 121, 122, and 123 may be electrically connected to one point (e.g., neutral point) through the first wire connection terminal 213.

Further, when the stator 100 and the stator cover 200 are coupled, each phase coil 121, 122, and 123 fixed to the second terminal recess 132 of the insulator 130 may be interposed in the respective corresponding slot 2142a of the second wire connection terminal 214 received inside the second terminal receiving portion 2122 corresponding to each phase coil, as illustrated in FIG. 6B. In this case, as the respective other end portions of the phase coils 121, 122, and 123 are electrically connected to the power connector 230 through the plurality of second wire connection terminals 214, the coil 120 may receive power from an external power source.

As such, as the stator cover 200 is integrally provided with the first wire connection terminal 213, the plurality of second wire connection terminals 214, and the power connector 230, when the first stator 100 and the stator cover 200 are coupled, the coils 120 are connected (e.g., Y-connection) through one compressing operation, thereby simplifying the motor assembly process.

FIG. 7 is a view illustrating an exemplary shape of a connector fixing portion included in portion C illustrated in FIG. 2 and a configuration of a terminal block of a power connector before being inserted into the connector fixing portion.

The stator cover 200 according to an embodiment may further include a first cover body (e.g., the first cover body 210 of FIG. 2), a second cover body 220, and a power connector 230.

Referring to FIG. 7, the terminal block 232 of the power connector 230 according to an embodiment may include a block housing 2321 forming a substantial exterior of the terminal block 232, and a pair of fixing protrusions 2322 protruding from two opposite side surfaces of the block housing 232.

In an embodiment, a stopper recess (2323 of FIG. 4) recessed from the bottom surface may be provided in the bottom surface of the block housing 2321. In an embodiment, the stopper recess 2323 may extend from the end of the block housing 2321 along the length direction of the block housing 2321.

A connector fixing portion 222 for fixing the power connector 230 during the motor assembly process may be provided on the second cover body 220 of the stator cover 200 according to an embodiment.

In an embodiment, the connector fixing portion 222 may include a pair of fixing ribs 2221 respectively provided on two opposite side ends of the connector fixing portion 222.

In an embodiment, the pair of fixing ribs 2221 may be configured to surround at least a portion of two opposite sides of the inserted terminal block 232 when the terminal block 232 is inserted into the connector fixing portion 222. For example, the pair of fixing ribs 2221 may surround the pair of fixing protrusions 2322, respectively, disposed on two opposite sides of the terminal block 232 when the terminal block 232 is inserted into the connector fixing portion 222. In an embodiment, each of the pair of fixing ribs 2221 may include a first portion 22211 extending in the upper direction from the edge of the connector fixing portion 222 and a second portion 22212 bent from the first portion 22221 and extending inward.

In an embodiment, each of the pair of fixing ribs 2221 may include a guide surface 22213 for guiding the insertion of the terminal block 232 when the terminal block 232 is inserted into the connector fixing portion 222. For example, the guide surface 22213 may be formed by chamfering at the inlet end of the inner surface of each of the pair of fixing ribs 2221.

In an embodiment, a stopper 2222 for limiting the insertion depth of the terminal block 232 may be provided on the upper surface of the connector fixing portion 222. In an embodiment, the stopper 2222 may be disposed adj acent to an outer end of the connector fixing portion 222. In an embodiment, the stopper 2222 may be disposed between the pair of fixing ribs 2221. In an embodiment, the stopper 2222 may be formed to protrude from the upper surface of the connector fixing portion 222 by a predetermined height. In an embodiment, when the terminal block 232 is inserted into the connector fixing portion 222, the stopper 2222 may be inserted into the stopper recess 2323 provided in the bottom surface of the terminal block 232. In this case, the insertion depth of the terminal block 232 may be limited as the stopper 2222 contacts the inner surface 2323a of the stopper recess 2323 of the terminal block 232 during the insertion of the terminal block 232.

A plurality of pin holes 232h respectively communicating with the lead wires 231 disposed inside the terminal block 232 may be provided in the upper surface of the terminal block 232. In this case, each lead wire 231 may be electrically connected to an external power source through the plurality of pin holes 232h, and thus the external power source may be applied to the coil 120 of the stator 100.

In an embodiment, when the terminal block 232 is inserted into the connector fixing portion 222, the upper surface of the terminal block 232 may be exposed between the pair of fixing rib 2221 structures. In this case, the pin hole 232h provided in the upper surface of the terminal block 232 may also be exposed to the outside. Therefore, if the electrical characteristics of the stator 100 are to be evaluated during the manufacturing process, the terminal block 232 does not need to be separated, thereby enhancing the convenience of the worker's tasks.

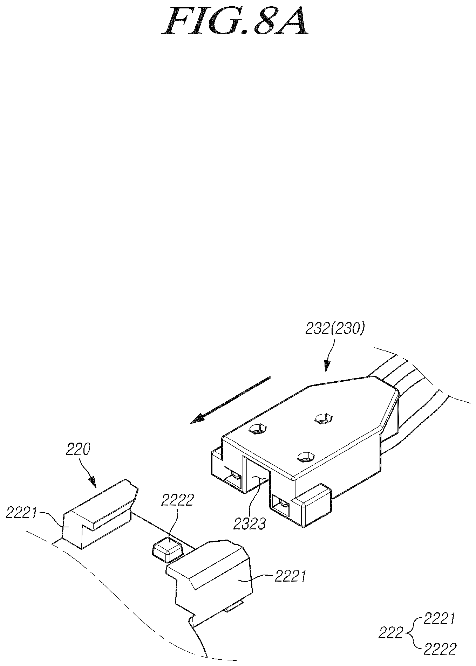

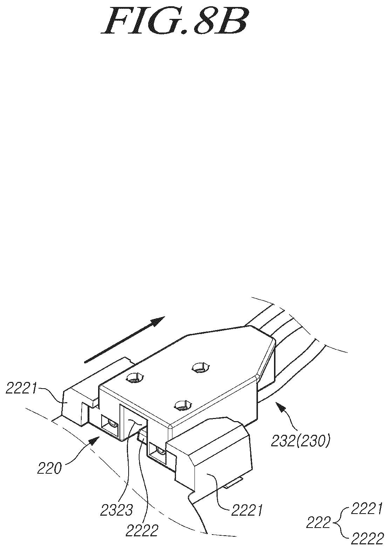

FIG. 8A is a view illustrating an operation in which a terminal block of a power connector is inserted into a connector fixing portion of a stator cover according to an embodiment of the disclosure. FIG. 8B is a view illustrating an operation in which a terminal block of a power connector is extracted from a connector fixing portion of a stator cover according to an embodiment of the disclosure.

Specifically, FIG. 8A is a view illustrating an operation in which the terminal block 232 of the power connector 230 is inserted into the connector fixing portion 222 of the stator cover 200, and FIG. 8B is a view illustrating an operation in which the terminal block 232 of the power connector 230 is extracted from the connector fixing portion 222 of the stator cover 200.

Referring to FIG. 8A, the terminal block 232 of the power connector 230 may be inserted into the connector fixing portion 222 along the inner surface of the pair of fixing ribs 2221 provided on the connector fixing portion 222. While the terminal block 232 of the power connector 230 is inserted into the connector fixing portion 222, if the stopper 2222 provided in the connector fixing portion 222 contacts the inner surface of the stopper recess 2333 of the terminal block 232, further insertion of the terminal block 232 is limited, and the insertion of the terminal block 232 is completed. Accordingly, the power connector 230 may be fixed to the stator cover 200 through the connector fixing portion 222.

Referring to FIG. 8B, illustrating the reverse process of the insertion of the power connector 230 of FIG. 8A described above, the terminal block 232 may be extracted from the connector fixing portion 222 by applying a predetermined force in the direction opposite to its insertion.

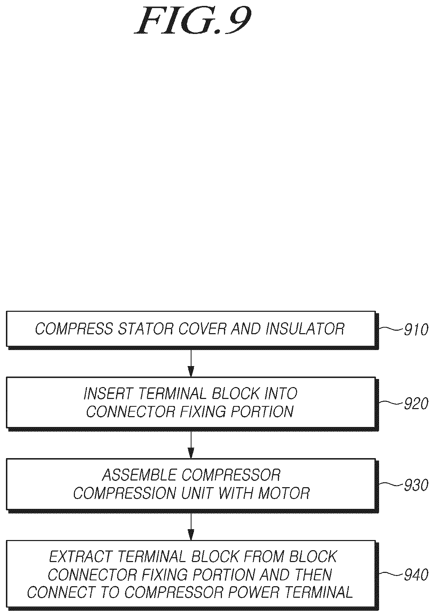

FIG. 9 is a flowchart schematically illustrating an assembly process of a motor according to an embodiment of the disclosure. FIG. 10 is a schematic illustration showing an assembly process of a motor according to an embodiment of the disclosure, with each step (a)-(d) represented by a moto assembly structure.

Referring to FIGS. 9 and 10, as step (a) of FIG. 10, the stator cover 100 and the stator cover 200 may be integrally coupled to each other by compressing the stator cover 200 from the upper side to the lower side of the stator 100 (operation 910). **In** an embodiment, each phase coil 120 may be connected in the first terminal recess 131 and the second terminal recess 132 provided in the insulator 130 of the stator 100 by such a simple process.

At step (b) of FIG. 10, in order to prevent interference between the power connector 230 and other components during the motor assembly process, the terminal block 232 of the power connector 230 may be inserted into the connector fixing portion 222 provided on the stator cover 200 to fix the power connector 230 to the stator cover 200 (operation 920).

At step (c) of FIG. 10, the driving unit 40a of the compressor may be assembled with the stator assembly (operation 930).

At step (d) of FIG. 10, after extracting the terminal block 232 from the connector fixing portion 222, the power connector 230 may be connected to the power terminal 40b of the compressor 40 to apply power to the coil 120 of the stator 100 from the outside (operation 940).

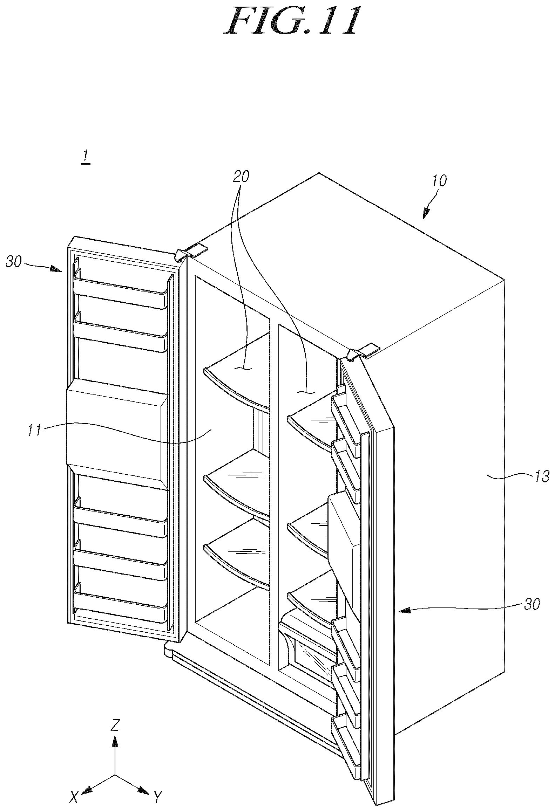

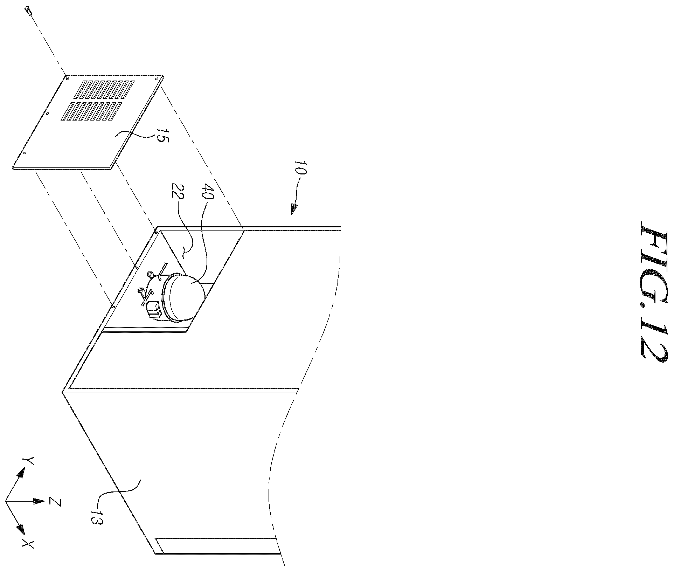

FIG. 11 is a front perspective view illustrating a refrigerator according to an embodiment of the disclosure. FIG. 12 is a rear perspective view illustrating a refrigerator according to an embodiment of the disclosure.

Specifically, FIG. 12 is a rear perspective view illustrating a refrigerator with the rear cover separated.

A refrigerator 1 according to an embodiment of the disclosure may include a main body 10.

The "main body 10" may include an inner case 11, an outer case 13 disposed on the outside of the inner case 11, and an insulator provided between the inner case 11 and the outer case 13.

The "inner case 11" may include at least one of a case, a plate, a panel, or a liner forming a storage compartment 20. The inner case 11 may be formed as a single body or may be formed by assembling a plurality of plates.

The "outer case 13" may form the outer appearance of the main body 10 and may be coupled to the outer side of the inner case 11 so that an insulator is disposed between the inner case 11 and the outer case 13.

The "insulator" may insulate the inside of the storage compartment 20 and the outside of the storage compartment 20 so that the temperature inside the storage compartment 20 is maintained at a set appropriate temperature without being affected by the environment outside the storage compartment 20. According to an embodiment, the insulator may include a foam insulator. The foam insulator may be formed by injecting and foaming a urethane foam formed by mixing polyurethane and a foaming agent between the inner case 11 and the outer case 13.

According to an embodiment, the insulator may further include a vacuum insulator in addition to the foam insulator, or the insulator may be composed of only a vacuum insulator instead of the foam insulator. The vacuum insulation material may include a core material and an outer cover material that accommodates the core material and seals the inside at a pressure close to vacuum or vacuum. However, the insulator is not limited to the foam insulator or the vacuum insulator, and may include various materials that may be used for insulation.

The "storage compartment 20" may include a space limited by the inner case 11. The storage compartment 20 may further include the inner compartment 11 defining a space corresponding to the storage compartment 20. Various items such as food, medicine, cosmetics, etc. may be stored in the storage compartment 20, and the storage compartment 20 may be formed so that at least one side thereof is opened to take in and out the items.

The refrigerator 1 may include one or more storage compartments 20. When two or more storage compartments 20 are formed in the refrigerator 1, each storage compartment 20 may have a different use and may be maintained at a different temperature. To that end, the storage compartments 20 may be partitioned from each other by a partition wall including an insulation material.

The storage compartment 20 may be provided to be maintained in an appropriate temperature range according to the use, and may include a "refrigerating compartment", a "freezing compartment", or an "adjustable-temperature compartment" divided by the use and/or temperature range thereof. The refrigerating compartment may be maintained at a temperature suitable for refrigerating and storing items, and the freezing compartment may be maintained at a temperature suitable for freezing and storing items. The term "refrigerating" may mean cooling the item to the extent that the item is not frozen, and for example, the refrigerating compartment may be maintained in the range of 0 degrees Celsius to 7 degrees Celsius. The term "freezing" may mean cooling the item to freeze or remain frozen, and for example, the freezing compartment may be maintained in the range of minus 20 degrees Celsius to minus 1 degree Celsius. The adjustable-temperature compartment may be used as any one of the refrigerating compartment or the freezing compartment regardless of the user's selection.

The storage compartment 20 may be referred to as a "vegetable compartment", a "fresh compartment", a "cooling compartment", an "ice-making compartment", and the like, in addition to the names "refrigerating compartment", "freezing compartment", and "adjustable-temperature compartment", and the terms "refrigerating compartment", "freezing compartment", and "adjustable-temperature compartment" used below should be understood to collectively mean storage compartments 20 having their respective corresponding uses and temperature ranges.

According to an embodiment, the refrigerator 1 may include at least one door 30 configured to open and close one open side of the storage compartment 20. The door 30 may be provided to open and close each of one or more storage compartments 20, or one door 30 may be provided to open and close a plurality of storage compartments 20. The door 30 may be rotatably or slidably installed on the front surface of the main body 10.

The "door 30" may be configured to seal the storage compartment 20 when the door 30 is closed. Like the main body 10, the door 30 may include an insulation material to insulate the storage compartment 20 when the door 30 is closed.

According to an embodiment, the door 30 may include a door outer plate forming a front surface of the door 30, a door inner plate forming a rear surface of the door 30 and facing the storage compartment 20, an upper cap, a lower cap, and a door insulator provided thereinside.

A gasket may be provided on the edge of the door inner plate to seal the storage compartment 20 by being in close contact with the front surface of the main body when the door 30 is closed. The door inner plate may include a dyke protruding rearward to mount a door 30 basket capable of storing an object.

According to an embodiment, the door 30 may include a door body and a front panel detachably coupled to a front side of the door body and forming a front surface of the door 30. The door body may include a door outer plate forming a front surface of the door body, a door inner plate forming a rear surface of the door body and facing the storage compartment 20, an upper cap, a lower cap, and a door insulator provided thereinside.

The refrigerator 1 may be classified into a French door type, a side-by-side type, a bottom mounted freezer (BMF), a top mounted freezer (TMF), or a one-door refrigerator 1 according to the arrangement of the door 30 and the storage compartment 20.

According to an embodiment, the refrigerator 1 may include a cold air supply device configured to supply cold air to the storage compartment 20.

The "cold air supply device" may include a machine, an instrument, an electronic device, and/or a system combining the machine, the instrument, and the electronic device capable of generating cold air and guiding the cold air to cool the storage compartment 20.

According to an embodiment, the cold air supply device may generate cold air through a refrigerating cycle including processes of compressing, condensing, expanding, and evaporating the refrigerant. To that end, the cold air supply device may include a refrigerating cycle device having a compressor 40, a condenser, an expansion device, and an evaporator capable of driving the refrigerating cycle.

According to an embodiment, the compressor 40 may compress the refrigerant to a high temperature and high pressure state. For example, the compressor 40 may compress gaseous refrigerant at high temperature and high pressure using the rotational force of a motor that rotates by receiving electrical energy from the outside. The compressor 40 is a capability-variable compressor, and vary the capacity by changing the frequency according to a driving control command. In an embodiment, the compressor may be a hermetic reciprocating compressor having a motor utilizing a stator assembly having the configuration described with reference to FIGS. 1 to 8B, but the disclosure is not limited thereto.

In an embodiment, the compressor 40 may be positioned inside a machine room 22 provided at the rear of the main body 10. In the compressor 40 as illustrated in FIG. 10, after the driving unit 40a of the compressor is assembled into the stator assembly in which the power connector 230 is received in the connector fixing portion 222, the power connector 230 of the stator assembly is extracted from the connector fixing portion 222 and connected to the power terminal 40b of the compressor 40, so that external power supplied from the outside of the refrigerator 1 may be supplied to the stator assembly. As the interference between the power connector of the stator assembly and other assembled components is reduced by such a series of motor (or compressor) assembly processes, it is possible to prevent damage to the power connector of the stator assembly and enhance the convenience of the worker's tasks.

According to an embodiment, the cold air supply device may include a semiconductor such as a thermoelectric element. The thermoelectric element may cool the storage compartment 20 by heating and cooling through the Peltier effect.

According to an embodiment, the refrigerator 1 may include a machine room 22 in which at least some components belonging to the cold air supply device are arranged.

The "machine room 22" may be provided to be partitioned and insulated from the storage compartment 20 to prevent heat generated from components disposed in the machine room 22 from being transferred to the storage compartment 20. The inside of the machine room 22 may be configured to communicate with the outside of the main body 10 to dissipate heat from components disposed inside the machine room 22. In an embodiment, the machine room 22 may be provided at the lower rear side of the main body 10. In an embodiment, the machine room 22 may be open on one side (e.g., the rear) to communicate with the outside of the refrigerator. In an embodiment, the open side of the machine room 22 may be covered by the rear panel 15. In an embodiment, the rear panel 15 may be provided with at least one communication hole to allow air in the machine room 22 to communicate with air outside the refrigerator. Although it is illustrated in the drawings that the rear panel 15 is a separate component, the disclosure is not limited thereto, and the rear panel 15 may be formed integrally with the outer case 13 of the refrigerator 1, or may be provided as a component included in the outer case 13.

According to an embodiment, the refrigerator 1 may include a dispenser provided on the door 30 to provide water and/or ice. The dispenser may be provided on the door 30 to be accessed by the user without opening the door 30.

According to an embodiment, the refrigerator 1 may include an ice maker provided to generate ice. The ice maker may include an ice making tray storing water, an ice maker separating ice from the ice making tray, and an ice bucket storing ice generated in the ice making tray.

According to an embodiment, the refrigerator 1 may include a controller for controlling the refrigerator 1.

The "controller" may include a memory storing or recording a program and/or data for controlling the refrigerator 1, and a processor outputting a control signal for controlling the cold air supply device according to the program and/or data stored in the memory.

The memory stores or records various information, data, instructions, programs, etc. necessary for the operation of the refrigerator 1. The memory may store temporary data generated while generating a control signal for controlling components included in the refrigerator 1. The memory may include at least one of a volatile memory and a non-volatile memory or a combination thereof.

The processor controls the overall operation of the refrigerator 1. The processor may control the components of the refrigerator 1 by executing a program stored in the memory. The processor may include a separate NPU that performs the operation of the artificial intelligence model. The processor may include a central processing unit, a graphics-only processor (GPU), and the like. The processor may generate a control signal for controlling the operation of the cold supply device. For example, the processor may receive temperature information about the storage compartment 20 from the temperature sensor, and generate a cooling control signal for controlling the operation of the cold air supply device based on the temperature information about the storage compartment 20.

Further, the processor may process the user input of the user interface according to the program and/or data stored/stored in the memory, and control the operation of the user interface. The user interface may be provided using an input interface and an output interface. The processor may receive a user input from the user interface. Further, the processor may transfer a display control signal and image data for displaying an image on the user interface to the user interface in response to the user input.

The processor and the memory may be provided integrally or separately. The processor may include one or more processors. For example, the processor may include a main processor and at least one sub-processor. The memory may include one or more memories.

The refrigerator 1 may include a processor and a memory controlling all components included in the refrigerator 1, and a plurality of processors and a plurality of memories individually controlling the components of the refrigerator 1. For example, the refrigerator 1 may include a processor and a memory controlling the operation of the cold air supply device according to the output of the temperature sensor. Further, the refrigerator 1 may include a separate processor and a separate memory controlling the operation of the user interface according to a user input.

The communication module may communicate with an external device such as a server, a mobile device, another home appliance, or the like through an access point (AP). The AP may connect the local area network (LAN) to which the refrigerator 1 or the user equipment is connected to the wide area network (WAN) to which the server is connected. The refrigerator 1 or the user device may be connected to the server through the wide area network (WAN).

The input interface may include a key, a touch screen, a microphone, and the like. The input interface may receive a user input and transfer the user input to the processor.

The output interface may include a display, a speaker, and the like. The output interface may output various notifications, messages, information, and the like generated by the processor.

## Claims

1. A motor, comprising:
a rotor;
a stator (100) including an insulator (130) and a plurality of coils (120) wound around the insulator (130); and
a stator cover (200) coupled to the stator (100),
wherein the insulator (130) includes a first terminal recess (131) receiving one end portion of each of the plurality of coils (120), and a second terminal recess (132) receiving another end portion of each of the plurality of coils (120), and
wherein the stator cover (200) includes:
a first terminal receiving portion (2113) in which a first wire connection terminal (213) is disposed and which is inserted into the first terminal recess (131);
a second terminal receiving portion (2122) in which a second wire connection terminal (214) is disposed and which is inserted into the second terminal recess (132); and
a power connector (230) including one end connected to the second wire connection terminal (214) of the second terminal receiving portion (2122) and the other end connected to an external power source to apply power to the plurality of coils (120).

2. The motor of claim 1, wherein the power connector (230) includes:
a lead wire (231) including one end connected to the second wire connection terminal (214); and
a terminal block (232) connected to the other end of the lead wire (231) and configured to be electrically connected to the external power source.

3. The motor of claim 2, wherein the stator cover (200) includes:
a first cover body (210) including the first terminal receiving portion (2113) and the second terminal receiving portion (2122); and
a second cover body (220) coupled to the first cover body (210) and including a connector fixing portion (222) that receives the terminal block (232).

4. The motor of claim 3, wherein the connector fixing portion (222) includes a pair of fixing ribs (2221) spaced apart from each other and surrounds at least a portion of each of two opposite side portions of the terminal block (232) in a state where the terminal block (232) is received by the connector fixing portion (222).

5. The motor of claim 4, wherein each of the pair of fixing ribs (2221) includes a chamfered outer end.

6. The motor of any one of claims 3 to 5, wherein the connector fixing portion (222) includes a stopper (2222) protruding from an upper surface of the connector fixing portion (222).

7. The motor of any one of claims 3 to 6, wherein the second cover body (220) of the stator cover (200) has an arc shape to cover an upper side of the first terminal receiving portion (2113) and the second terminal receiving portion (2122) provided in the first cover body (210).

8. The motor of any one of claims 3 to 7, wherein each of the first terminal receiving portion (2113) and the second terminal receiving portion (2122) protrudes from a bottom surface of the second cover body (220) facing the insulator (130), and includes a plurality of slits (2113a, 2122a) cut to be interposed by an end portion of each of the plurality of coils (120).

9. The motor of any one of claims 1 to 8, wherein the first wire connection terminal (213) is configured to electrically connect the one end portion of each of the plurality of coils (120) at a single point in a state where the stator (100) is coupled to the stator cover (200), and
wherein the second wire connection terminal (214) is configured to electrically connect the other end portion of each of the plurality of coils (120) to the power connector (230) so that power is applied from the external power source to the plurality of coils (120) in the state where the stator (100) is coupled to the stator cover (200).

10. A motor comprising:
a rotor;
a stator (100) including an insulator (130) and a plurality of coils (120) wound around the insulator (130); and
a stator cover (200) coupled to the stator (100),
wherein the stator cover (200) includes:
a lead wire (231) electrically connected to the plurality of coils (120);
a terminal block (232) coupled to an end portion of the lead wire (231) and connected to an external power source to receive power; and
a connector fixing portion (222) that receives the terminal block (232) therein and surround at least a portion of the terminal block (232) in a state where the terminal block (232) is received by the connector fixing portion (222).

11. The motor of claim 10, wherein the terminal block (232) includes a block housing (2321) and a pair of fixing protrusions (2322) that protrudes from two opposite side portions, respectively, of the block housing (2321), and
wherein the connector fixing portion (222) includes a pair of fixing ribs (2221) spaced apart from each other and surrounds the pair of fixing protrusions (2322) in a state where the terminal block (232) is received by the connector fixing portion (222).

12. The motor of claim 11, wherein each of the pair of fixing ribs (2221) includes a chamfered outer end.

13. The motor of any one of claims 10 to 12, wherein the connector fixing portion (222) includes a stopper (2222) protruding from an upper surface of the connector fixing portion (222).

14. The motor of any one of claims 10 to 13, wherein at least a portion of an upper surface of the power connector (230) is externally exposed in the state where the terminal block (232) is received by the connector fixing portion (222).

15. A refrigerator (1), comprising:
a main body (10) including a storage compartment (20) therein;
a door (30) rotatably connected to the main body (10) to open and close the storage compartment (20); and
a cold air supply device including a compressor (40) including a motor, and configured to supply cold air into the storage compartment (20),
wherein the motor of the compressor (40) includes:
a rotor; a stator (100) including an insulator (130) and a plurality of coils (120) wound around the insulator (130); and a stator cover (200) coupled to the stator (100),
wherein the insulator (130) of the stator (100) includes a first terminal recess (131) receiving one end portion of each of the plurality of coils (120), and a second terminal recess (132) receiving the other end portion of each of the plurality of coils (120), and
wherein the stator cover (200) includes:
a first terminal receiving portion (2113) in which a first wire connection terminal (213) is disposed and which is inserted into the first terminal recess (131);
a second terminal receiving portion (2122) in which a second wire connection terminal (214) is disposed and which is inserted into the second terminal recess (132);
a power connector (230) including one end portion connected to the second wire connection terminal (214) of the second terminal receiving portion (2122) and the other end portion connected to an external power source to apply power to the plurality of coils (120); and
a connector fixing portion (222) receives the other end portion of the power connector (230) therein and surrounds at least a portion of the other end portion of the power connector (230) in a state where the other end portion of the power connector (230) is received by the connector fixing portion (222).
